# EUROPÄISCHE PATENTSCHRIFT

(11) **EP 2 552 727 B1**
(45) Veröffentlichungstag und Bekanntmachung des Hinweises auf die Patenterteilung: **07.04.2021**
(21) Anmeldenummer: 11701829.1
(22) Anmeldetag: 03.02.2011
(51) Int. Cl.: B60L 50/15, H02P 29/024, B60L 3/00

(54) **WECHSELRICHTER FÜR EINE ELEKTRISCHE MASCHINE UND VERFAHREN ZUM BETREIBEN EINES WECHSELRICHTERS FÜR EINE ELEKTRISCHE MASCHINE**
INVERTER FOR AN ELECTRICAL MACHINE AND METHOD FOR OPERATING AN INVERTER FOR AN ELECTRICAL MACHINE
ONDULEUR POUR UNE MACHINE ÉLECTRIQUE ET PROCÉDÉ POUR FAIRE FONCTIONNER UN ONDULEUR POUR UNE MACHINE ÉLECTRIQUE

(30) Priorität: 01.04.2010 DE 102010003595
(43) Veröffentlichungstag der Anmeldung: 06.02.2013
(73) Patentinhaber: Robert Bosch GmbH, 70442 Stuttgart (DE)
(72) Erfinder: SCHOENKNECHT, Andreas, 70327 Stuttgart (DE); HAAS, Axel, 71720 Oberstenfeld (DE)
(86) Internationale Anmeldenummer: PCT/EP2011/051527
(87) Internationale Veröffentlichungsnummer: WO 2011/120727

(56) Entgegenhaltungen:
- US-A1- 2007 063 661
- US-B1- 6 239 566

## Beschreibung

Die Erfindung betrifft einen Wechselrichter für eine elektrische Maschine sowie ein Verfahren zum Betreiben eines Wechselrichters für eine elektrische Maschine.

### Stand der Technik

Elektrische Maschinen mit Wechselrichtern werden zum Beispiel in Hybridfahrzeugen eingesetzt, wo sie wahlweise im Motor- oder Generatorbetrieb betrieben werden. Im Motorbetrieb erzeugt die elektrische Maschine ein zusätzliches Antriebsmoment, welches einen Verbrennungsmotor, zum Beispiel in einer Beschleunigungsphase unterstützt, im Generatorbetrieb erzeugt sie elektrische Energie, die in einem Energiespeicher, wie zum Beispiel einer Batterie oder einem Super-Cab, gespeichert wird. Betriebsart und Leistung der elektrischen Maschine werden mittels des Wechselrichters eingestellt.

Da bei Hybridkraftfahrzeugen verhältnismäßig hohe Spannungen bereitgestellt werden müssen, um die elektrische Maschine motorisch zum Antreiben des Kraftfahrzeugs verwenden zu können, sind zum Schutz des elektrischen Netzwerks und der an dem elektrischen Netzwerk angeschlossenen Komponenten stets Maßnahmen vorgesehen, die dauerhafte Beschädigungen verhindern.

So ist es beispielsweise bekannt, den elektrischen Speicher von dem Netzwerk elektrisch zu trennen, wenn eine Fehlfunktion des elektrischen Netzwerks erfasst wird. Befindet sich die elektrische Maschine zu diesem Zeitpunkt im generatorischen Betrieb, so hat dies zur Folge, dass sich die Netzwerkspannung stark erhöht, was zur Zerstörung der Endstufen des Wechselrichters führen kann.

Um das zu verhindern, ist es beispielsweise aus der EP 1 524 761 A1 bekannt, bei Überschreiten einer vorgebbaren Grenzspannung des Wechselrichters den Wechselrichter in einen Kurzschlussbetrieb zu schalten.

Aus der DE 102 21 081 A1 ist ein Wechselrichter für eine elektrische Maschine bekannt, der mehrere Schaltelemente umfasst, die in einer Brückenschaltung angeordnet sind und eine Verbindung zwischen der elektrischen Maschine und einer Batterie herstellen. Die im Low-Side-Zweig des Wechselrichters eingebauten Schaltelemente sind solche, die ohne anliegende Steuerspannung leiten, also sogenannte Normally-On-Schaltelemente. Damit wird sichergestellt, dass bei fehlender Versorgungsspannung und sich drehender elektrischer Maschine die Wicklungen der elektrischen Maschine kurzgeschlossen sind und keine Überspannungen auftreten können.

Ein aus der DE 10 2006 003 254 A1 bekanntes Verfahren zum Abschalten einer elektrischen Maschine mit Pulswechselrichter im Falle einer Störung sieht vor, unerwünschte Nebeneffekte beim Abschalten der elektrischen Maschine dadurch zu minimieren und den regulären Maschinenbetrieb zu maximieren, dass die elektrische Maschine zunächst in einen Freischalt-Betrieb, in dem sämtliche Schalter des Pulswechselrichters geöffnet sind, und nachfolgend in einen Kurzschluss-Modus geschaltet wird, in dem die mit dem hohen Potenzial verbundenen Schalter offen und die mit dem niedrigen Potenzial verbundenen Schalter geschlossen sind.

Aus der DE 10 2007 020 509 A1 ist ein Verfahren zur Fehlerbehandlung bei elektrischen Maschinen eines Hybridantriebs bekannt, bei welchem zunächst erfasst wird, ob mindestens ein Betriebsparameter der elektrischen Maschine über einem zugeordneten Betriebsparameter-Grenzwert liegt. Wird dabei erfasst, dass mindestens ein Betriebsparameter über dem zugeordneten Grenzwert liegt, wird ein Versorgungsanschluss der elektrischen Maschine für ein dem Betriebsparameter zugeordnetes Zeitintervall freigeschaltet und der Versorgungsanschluss nach Ablauf des Zeitintervalls auf Masse kurzgeschlossen.

Aus der DE 33 37 088 ist eine Einrichtung zur potentialfreien Ansteuerung von elektronischen Schaltern von Drehstromwechselrichtern mittels eines Transformators bekannt.

Aus der DE 10 2009 044944 ist eine Wechselrichteranordnung mit Endstufeneinheiten bekannt. Im Fehlerfall werden die Endstufeneinheiten von einer Notbetrieb-Steuerung angesteuert. Die Notbetrieb-Steuerung wird von einer Notbetrieb-Versorgung mit Energie versorgt.

Aus der US 6 239 566 ist ein Antriebssystem für eine permanent erregte elektrische Maschine bekannt. Weiter ist eine Vorrichtung vorgesehen, die bei Vorliegen eines vorgegebenen Betriebszustandes einen Befehl zum Erzeugen eines Kurzschlusses zwischen jedem Anschluss der elektrischen Maschine ausgibt.

### Offenbarung der Erfindung

Die Erfindung wird durch die Merkmale des unabhängigen Vorrichtungsanspruchs 1 definiert.

Das Energieversorgungsnetz zur Versorgung der elektrischen Maschine ist beispielsweise ein Hochvolt-Traktionsnetz in einem Hybridfahrzeug. Dieses Energieversorgungsnetz ist mit einem Energiespeicher, zum Beispiel einer HochvoltBatterie, verbunden. Die davon unabhängige Versorgungseinheit wird beispielsweise über das Niedervolt-Bordnetz eines Hybridfahrzeuges gespeist und dient der Energieversorgung der Endstufeneinheiten. Die von dem Energieversorgungsnetz unabhängige Versorgungseinheit ist insbesondere nicht galvanisch mit dem Energieversorgungsnetz verbunden. Die Endstufeneinheiten weisen jeweils mindestens eine Endstufe, zum Beispiel in Form einer Leistungshalbleiterschaltung, und mindestens eine Endstufenansteuerung auf. In einem Normalbetrieb erhalten die Endstufenansteuerungen von der Steuereinheit jeweils Steuervorgaben, welche dann in geeignete Steuersignale zur Ansteuerung der Endstufen umgesetzt werden. Weiter ist für die Endstufeneinheiten mindestens eine Notbetrieb-Steuerung vorgesehen zur Steuerung der Endstufeneinheiten in einem Notbetrieb.

Vorteilhaft ist somit durch das Vorsehen mindestens einer der Endstufeneinheiten zugeordneten aktivierbaren und deaktivierbaren Notbetrieb-Steuerung und der Überprüfung des Statussignals der unabhängigen Versorgungseinheit und des Bereitschaftssignals des Steuergerätes mittels der Koordinations-Steuerung sichergestellt, dass jederzeit insbesondere die Endstufen des Wechselrichters, in einen sicheren Betriebszustand, zum Beispiel in einen Kurzschlussbetrieb, geschaltet werden können. Während des Einschaltvorgangs oder des Ausschaltvorgangs des Wechselrichters oder auch bei einer Fehlfunktion der Steuereinheit und/oder der Versorgungseinheit des Wechselrichters können somit insbesondere Überspannungen im Energieversorgungsnetz, welche zu einer dauerhaften Schädigung der Endstufen führen können, verhindert werden. Da die Notbetrieb-Steuerung aktivierbar und deaktivierbar ausgeführt ist, kann mittels der Koordinations-Steuerung, in Abhängigkeit des Status-Signal der unabhängigen Versorgungseinheit und einem Bereitschafts-Signal der Steuereinheit, von dem Notbetrieb wieder in den Normalbetrieb umgeschaltet werden.

In einer Weiterbildung der Erfindung ist vorgesehen, dass die Koordinations-Steuerung die Notbetrieb-Steuerung deaktiviert, wenn die unabhängige Versorgungseinheit mittels der Abgabe des Status-Signals eine Bereitschaft zur Energieversorgung der Endstufeneinheiten bestätigt und das Bereitschafts-Signal der Steuereinheit abgegeben wird und diese Signale von der Koordinations-Steuerung empfangen werden. Somit wird nur dann die Notbetrieb-Steuerung deaktiviert, wenn beide Signale signalisieren, dass die Bereitschaft zur Übernahme der Energieversorgung durch die unabhängige Versorgungseinheit und das Bereitschaftssignal der Steuereinheit zur Übernahme der Ansteuerung der Endstufenansteuerung vorliegen.

In einer Weiterbildung der Erfindung ist mindestens eine der Endstufeneinheiten zugeordnete Notbetrieb-Versorgung zur Erzeugung einer Versorgungsenergie für die Endstufeneinheiten aus dem Energieversorgungsnetz vorgesehen. Die Notbetrieb-Versorgung ist einschaltbar und abschaltbar ausgeführt. Des Weiteren ist mindestens eine der Endstufeneinheiten zugeordnete Koordinations-Steuerung vorgesehen, die das Einschalten und/oder Abschalten der Notbetrieb-Versorgung in Abhängigkeit eines Status-Signals der unabhängigen Versorgungseinheit und eines Bereitschafts-Signal der Steuereinheit koordiniert.

Im Notbetrieb erfolgt die Energieversorgung der Endstufeneinheiten über die Notbetrieb-Versorgungen, wobei diese die notwendige Energie aus dem Energieversorgungsnetz erzeugen. Die Koordinations-Steuerung koordiniert das Einschalten und/oder Abschalten der Notbetrieb-Versorgung in Abhängigkeit des Status-Signal der unabhängigen Versorgungseinheit und dem Bereitschafts-Signal der Steuereinheit.

Vorteilhaft ist somit durch das Vorsehen mindestens einer der Endstufeneinheitei zugeordneten ein- und abschaltbaren Notbetrieb-Versorgung sichergestellt, dass jederzeit insbesondere die Endstufen des Wechselrichters, in einen sicheren Betriebszustand, zum Beispiel in einen Kurzschlussbetrieb, geschaltet werden können, auch wenn die Spannungsversorgung mittels der unabhängigen Versorgungseinheit nicht verfügbar ist. Während des Einschaltvorgangs oder des Ausschaltvorgangs des Wechselrichters oder auch bei einer Fehlfunktion der Steuereinheit und/oder der Versorgungseinheit des Wechselrichters können somit insbesondere Überspannungen im Energieversorgungsnetz, welche zu einer dauerhaften Schädigung der Endstufen führen können, verhindert werden. Da die Notbetrieb-Versorgung ein- und abschaltbar ausgeführt ist, kann mittels der Koordinations-Steuerung, in Abhängigkeit des Status-Signal der unabhängigen Versorgungseinheit und einem Bereitschafts-Signal der Steuereinheit, von dem Notbetrieb wieder in den Normalbetrieb umgeschaltet werden.

In einer Weiterbildung der Erfindung ist vorgesehen, dass die Koordinations-Steuerung die Notbetrieb-Versorgung abschaltet, wenn die unabhängige Versorgungseinheit mittels der Abgabe des Status-Signals eine Bereitschaft zur Energieversorgung der Endstufeneinheiten bestätigt und das Bereitschafts-Signal der Steuereinheit abgegeben wird und diese Signale von der Koordinations-Steuerung empfangen werden. Somit wird nur dann die Notbetrieb-Versorgung abgeschaltet, wenn beide Signale signalisieren, dass die Bereitschaft zur Übernahme der Energieversorgung durch die unabhängige Versorgungseinheit und das Bereitschaftssignal der Steuereinheit zur Übernahme der Ansteuerung der Endstufenansteuerung vorliegen.

In einer Weiterbildung der Erfindung ist vorgesehen, dass der Wechselrichter mindestens einen Potentialübertrager aufweist und das Status-Signal der unabhängigen Versorgungseinheit und das Bereitschafts-Signal der Steuereinheit auf die Versorgungsspannung aufmoduliert werden und somit über den Potentialübertrager in die Endstufeneinheiten übermittelt werden. Technischer Hintergrund dieser Ausgestaltung ist, dass bei Wechselrichtern größerer Leistung und somit hohen Strömen und Spannungen die Steuerelektronik und die Endstufeneinheiten elektrisch getrennt, also nicht galvanisch miteinander verbunden, sind. Damit die Endstufeneinheit/en potentialfrei ausgebildet werden können, müssen sowohl die Versorgungsspannung als auch die Steuersignale in die Endstufeneinheit/en übertragen werden. Zur Spannungsversorgung der Endstufeneinheit/en wird daher außerhalb der Endstufeneinheiten eine Wechselspannung als Versorgungsspannung erzeugt, die mittels mindestens einem Potentialübertrager, beispielsweise einem Transformator, in die Endstufeneinheiten übertragen wird. Die auf der Sekundärseite des Potentialübertragers erzeugte Wechselspannung wird gleichgerichtet und somit die potentialfreie Versorgungsspannung für die Endstufeneinheiten erzeugt. Mittels dieses Potentialübertragers werden auch die Steuersignale in die Endstufeneinheiten übertragen, indem sie auf die Wechselspannung auf der Primärseite des Potentialübertragers aufmoduliert werden, und auf der Sekundärseite des Potentialübertragers in einer Signalerkennungseinheit demoduliert und rekonstruiert werden und wieder als Steuersignal ausgegeben werden. Die Aufmodulierung der Steuersignale auf die Wechselspannung kann auf unterschiedliche Art und Weise erfolgen. Beispielsweise als Veränderung der Frequenz, als Veränderung des Tastverhältnisses, als Veränderung der Amplitude der Wechselspannung oder als aufmoduliertes Signal. Die Potentialübertrager können insbesondere für die Übertragung von Steuersignalen auch bidirektional verwendet werden, also innerhalb des Wechselrichters in die Endstufeneinheit hinein, aber auch umgekehrt. Gemäß dieser Weiterbildung werden somit beide Signale auf die Versorgungsspannung aufmoduliert und mittels des Potentialübertragers auch diese beiden Signale in die Endstufeneinheiten übertragen. Somit ist eine zusätzliche Übertragungsverbindung innerhalb des Inverters in die Endstufeneinheiten zur Übertragung der beiden Signale nicht notwendig. Somit werden vorteilhaft Bauraum und zusätzliche Bauteile eingespart.

Die Erfindung wird durch die Merkmale des unabhängigen Verfahrensanspruchs 6 definiert.

In einer Weiterbildung der Erfindung ist vorgesehen, dass die Koordinations-Steuerung die Notbetrieb-Steuerung deaktiviert, wenn die unabhängige Versorgungseinheit mittels der Abgabe des Status-Signals eine Bereitschaft zur Energieversorgung der Endstufeneinheiten bestätigt und ein Bereitschafts-Signal der Steuereinheit abgegeben wird und diese Signale von der Koordinations-Steuerung empfangen werden.

Gemäß einer Weiterbildung des erfindungsgemäßen Verfahren zum Betreiben eines Wechselrichters für eine elektrische Maschine, wird im Notbetrieb, welcher insbesondere während des Einschaltvorgangs oder des Ausschaltvorgangs des Wechselrichters oder auch bei einer Fehlfunktion der Steuereinheit und/oder der Versorgungseinheit des Wechselrichters aktiviert wird, durch mindestens eine Notbetrieb-Versorgung Energie zur Energieversorgung der Endstufeneinheiten aus dem Energieversorgungsnetz erzeugt. Weiter weist der Wechselrichter eine der Endstufeneinheiten zugeordnete Koordinations-Steuerung auf, welche ein Einschalten oder Ausschalten der Notbetrieb-Versorgung koordiniert. Die Koordinations-Steuerung schaltet die Notbetrieb-Versorgung in Abhängigkeit des Status-Signals der unabhängigen Versorgungseinheit und einem Bereitschafts-Signal der Steuereinheit ein oder aus.

In einer Weiterbildung der Erfindung ist vorgesehen, dass die Koordinations-Steuerung die Notbetrieb-Versorgung abschaltet, wenn die unabhängige Versorgungseinheit mittels der Abgabe des Status-Signals eine Bereitschaft zur Energieversorgung der Endstufeneinheiten bestätigt und ein Bereitschafts-Signal der Steuereinheit abgegeben wird und diese Signale von der Koordinations-Steuerung empfangen werden.

Weitere Merkmale und Vorteile von Ausführungsformen der Erfindung ergeben sich aus der nachfolgenden Beschreibung mit Bezug auf die beigefügten Figuren.

### Kurze Beschreibung der Figuren

Es zeigen:
- Fig. 1: ein schematisches Blockschaltbild eines Wechselrichters, und
- Fig. 2: eine schematische Darstellung eines Ausschnitts einer Ausgestaltung eines erfindungsgemäßen Wechselrichters mit einem Potentialübertrager, und
- Fig. 3: eine schematische Darstellung einer Schaltungsanordnung zur Durchführung des erfindungsgemäßen Verfahrens

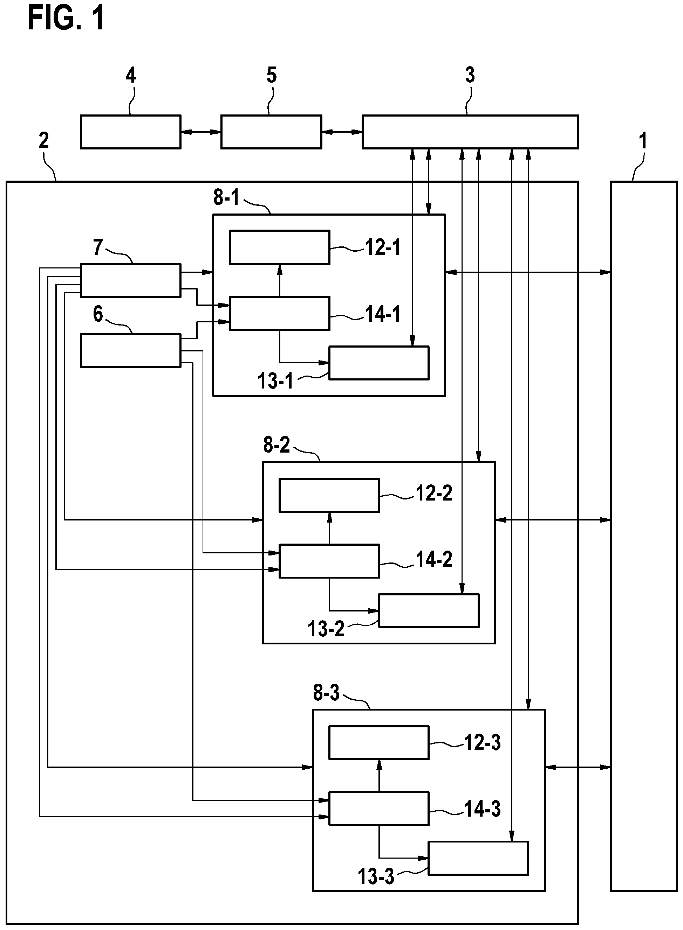

In Figur 1 ist eine elektrische Maschine 1 ist über einen Wechselrichter 2 mit einem Energieversorgungsnetz 3, welches zum Beispiel als Hochvolt-Traktionsnetz in einem Hybridfahrzeug ausgeführt sein kann, verbunden. Wird die elektrische Maschine 1 im Motorbetrieb betrieben, so wird sie aus dem Energieversorgungsnetz 3 mit Energie versorgt. Bei Betrieb im Generatorbetrieb kann die elektrische Maschine umgekehrt elektrische Energie in das Energieversorgungsnetz 3 einspeisen. Das Energieversorgungsnetz 3 ist mit einem Energiespeicher 4, zum Beispiel einer Batterie, verbunden. Über einen Schalter 5 ist das Energieversorgungsnetz 3, insbesondere bei Erkennen einer Fehlfunktion innerhalb des elektrischen Netzwerkes, von dem Energiespeicher 4 trennbar. Der Wechselrichter 2 weist eine Steuereinheit 6, eine Versorgungseinheit 7 sowie eine oder mehrere Endstufeneinheiten 8 auf. Dabei ist in diesem Ausführungsbeispiel für jede Phase der elektrischen Maschine 1 jeweils eine Endstufeneinrichtung 8 vorgesehen. Im dargestellten Beispiel wird von einer dreiphasigen elektrischen Maschine ausgegangen, so dass drei Endstufeneinheiten 8-1, 8-2 und 8-3 vorgesehen sind. Abhängig von der Ausgestaltung und Zuordnung der Endstufeneinheit/en 8 je Phase und von der Anzahl der Phasen der elektrischen Maschine 1 können aber auch mehr oder weniger als drei Endstufeneinheiten vorgesehen sein.

Die Versorgungseinheit 7 dient der Energieversorgung der Endstufeneinheiten 8-1, 8-2 und 8-3. Sie ist unabhängig von dem Energieversorgungsnetz 3 ausgeführt und wird beispielsweise über das Niedervolt-Bordnetz eines Hybridfahrzeuges gespeist. Die Steuerung der Endstufeneinheiten 8-1, 8-2 und 8-3 erfolgt über die Steuereinheit 6.

Die Endstufeneinheiten 8 weisen jeweils eine Endstufe 9, zum Beispiel in Form einer Leistungshalbleiterschaltung, und eine Endstufenansteuerung 10 auf. Von der Steuereinheit 6 erhalten die Endstufenansteuerungen 10 jeweils Steuervorgaben, welche dann in geeignete Steuersignale zur Ansteuerung der Endstufen 9 umgesetzt werden.

Um die Endstufeneinheiten 8 auch bei fehlerhafter Ansteuerung durch die Steuereinheit 6 oder unzureichender Energieversorgung durch die Versorgungseinheit 7, das heißt während des Einschaltvorgangs oder des Ausschaltvorgangs des Wechselrichters 2 oder auch bei einer Fehlfunktion der Steuereinheit 6 und/oder der Versorgungseinheit 7 des Wechselrichters, betriebsbereit zu halten und Überspannungen auf dem Energieversorgungsnetz 3 sicher zu verhindern, sind in jeder Endstufeneinheit 8 eine Notbetrieb-Steuerung 12, eine Notbetrieb-Versorgung 13 und eine Koordinations-Steuerung 14 vorgesehen. Die Koordinations-Steuerung 14 steuert den Betrieb der Notbetrieb-Steuerung 12 und der Notbetrieb-Versorgung 13 sowie das Umschalten auf den Normalbetrieb während des Ein- und Ausschalten des Wechselrichters 2, oder bei Fehlfunktion. Dabei werden die Steuervorgaben für die Endstufenansteuerungen 10 und damit die Steuerung der Endstufeneinheiten 8 durch die jeweilige Notbetrieb-Steuerung 12 derart übernommen, dass Schaltelemente innerhalb der Endstufe 9 in einen Kurzschlussbetrieb geschaltet werden. Die Energieversorgung der Endstufeneinheiten 8 erfolgt im Notbetrieb über die Notbetrieb-Versorgungen 13, wobei diese die notwendige Energie aus dem Energieversorgungsnetz 3 erzeugen.

Im dargestellten Ausführungsbeispiel ist für jede Endstufeneinheit 8-1 bis 8-3 jeweils eine eigene Koordinations-Steuerung 14-1 bis 14-3, eine Notbetrieb-Steuerung 12-1 bis 12-3 und eine Notbetrieb-Versorgung 13-1 bis 13-3 vorgesehen. Alternativ dazu können aber auch eine oder mehrere Koordinations-Steuerung 14, eine oder mehrere Notbetrieb-Steuerung 12 und/oder eine oder mehrere Notbetrieb-Versorgung 13 vorgesehen sein, die allen oder zumindest mehreren Endstufeneinheiten 8 zugeordnet sind. Entscheidend ist lediglich, dass jeder vorhandenen und genutzten Endstufeneinheit 8 eine Koordinations-Steuerung 14, eine Notbetrieb-Steuerung 12 und eine Notbetrieb-Versorgung 13 zugeordnet ist, so dass im Fehlerfall eine von der Steuereinheit 6 und der Versorgungseinheit 7 unabhängige Steuerung bzw. Energieversorgung der Endstufeneinheit 8 sichergestellt ist.

Da während des Notbetriebs, also im Fehlerfall, kein häufiges Schalten der Endstufen 9 nötig ist, ist auch kein großer Umladestrom durch die Notbetrieb-Versorgung 13 bereitzustellen. Diese kann somit für kleine Verlustleistungen ausgelegt werden.

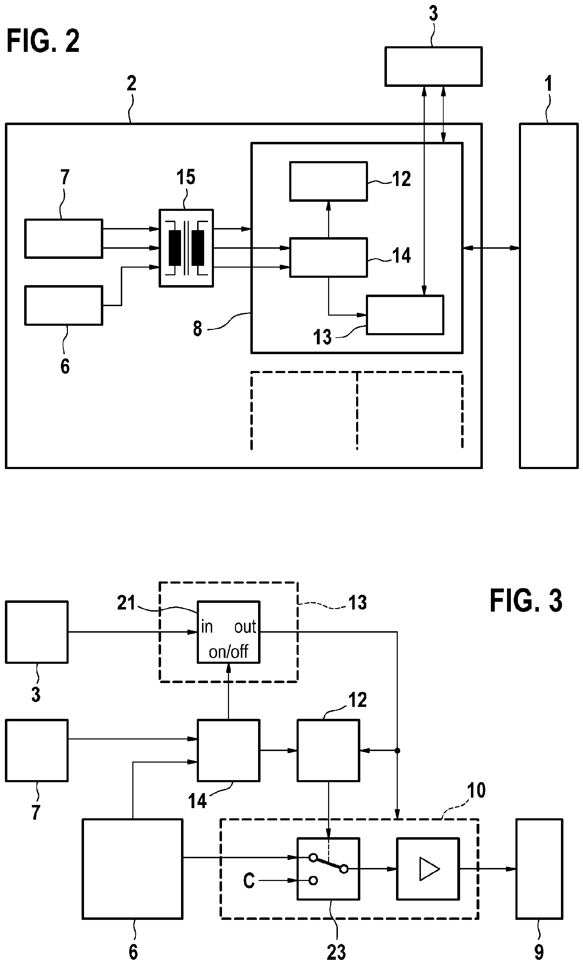

In Fig. 2 ist schematisch ein Ausschnitt einer Ausgestaltung einer Schaltung zur Realisierung des erfindungsgemäßen Wechselrichters mit einem Potentialübertrager 15 dargestellt. Die Endstufeneinheit 8 umfasst die Koordinationssteuerung 14, welche zwei Eingangssignale empfängt. Diese sind ein Status-Signal der unabhängigen Versorgungseinheit 7 und ein Bereitschafts-Signal der Steuereinheit 6. Diese beiden Signale werden potentialfrei zu der Koordinations-Steuerung 14 übertragen. Hierzu werden die Signale auf die zu übertragende Versorgungsspannung aufmoduliert, mittels des Potentialübertragers 15 zu der Endstufeneinheit 8 übertragen und anschließend nach einer Demodulation der Koordinations-Steuerung 14 zugeführt. In der Koordinations-Steuerung 14 werden die Signale überprüft und ausgewertet. In Abhängigkeit der Auswertung wird die Notbetrieb-Versorgung 13 ein- oder abgeschaltet und die Notbetrieb-Steuerung 12 aktiviert oder deaktiviert.

In Fig. 3 ist schematisch eine beispielhafte Schaltung zur Realisierung des erfindungsgemäßen Verfahrens dargestellt. Dabei empfängt die Koordinationssteuerung 14 zwei Eingangssignale, das Status-Signal der unabhängigen Versorgungseinheit 7 und das Bereitschafts-Signal der Steuereinheit 6. Wenn das Status-Signal, welches eine Bereitschaft der unabhängigen Versorgungseinheit 7 zur Energieversorgung der Endstufeneinheit/en bestätigt, und das Bereitschafts-Signal der Steuereinheit 6 von der Koordinations-Steuerung 14 empfangen werden, werden die Notbetrieb-Steuerung 12 deaktiviert und die Notbetrieb-Versorgung 13 abgeschaltet. Sobald eines der Signale nicht empfangen werden kann, werden die Notbetrieb-Steuerung 12 aktiviert und die Notbetrieb-Versorgung 13 mittels der Koordinations-Steuerung 14 eingeschaltet. Die Notbetrieb-Versorgung 13 erzeugt somit Energie aus dem Energieversorgungsnetz 3 und mittels der Notbetrieb-Steuerung 13 wird ein in der Endstufenansteuerung 10 vorgesehenes Schaltmittel 23 betätigt. Dies hat zur Folge, dass die Endstufe 9 nun nicht mehr über ein von der Steuereinheit 6 vorgegebenes Steuersignal gesteuert wird, sondern über ein Notbetriebs-Steuersignal C, welches zum Beispiel dazu führt, dass der oder die Low-Side-Schaltelemente innerhalb der Endstufe 9 leitend geschaltet werden. Wird diese Steuerung für alle vorhandenen und genutzten Endstufeneinheiten 8 angewendet, wird ein Kurzschlussbetrieb des Wechselrichters 2 realisiert, welcher eine Überspannung in dem Energieversorgungsnetz 3 und damit eine dauerhafte Schädigung der Endstufen 9 sicher verhindert.

Zusätzlich kann auch noch der Stromfluss durch die Endstufen überwacht werden und bei Diagnose eines Überstromes kann das Schalten in einen Kurzschlussbetrieb erst gar nicht zugelassen werden oder ein bereits begonnener Kurzschlussbetrieb abgebrochen werden. Auf diese Weise kann auch noch eine Schädigung der Endstufen durch Überströme verhindert werden.

## Patentansprüche

1. Wechselrichter (2) für eine elektrische Maschine (1),
mit mindestens zwei Endstufeneinheiten (8) zur Herstellung einer Verbindung zwischen der elektrischen Maschine (1) und einem Energieversorgungsnetz (3),
mit einer Steuereinheit (6) zum Steuern der mindestens zwei Endstufeneinheiten (8),
mit einer von dem Energieversorgungsnetz (3) unabhängigen Versorgungseinheit (7) zur Energieversorgung der Endstufeneinheiten (8), mit mindestens einer den Endstufeneinheiten (8) zugeordneten Notbetrieb-Steuerung (12) zur Steuerung der Endstufeneinheiten (8) derart, dass Schaltelemente innerhalb der Endstufeneinheiten (8) in einen Kurzschlussbetrieb geschaltet werden
**dadurch gekennzeichnet, dass**
in jeder Endstufeneinheit (8) eine solche Notbetrieb-Steuerung (12), eine Notbetrieb-Versorgung (13) und eine Koordinations-Steuerung (14) vorgesehen sind,
und die Koordinations-Steuerung (14) in Abhängigkeit eines Status-Signals der unabhängigen Versorgungseinheit (7) und eines Bereitschafts-Signals der Steuereinheit (6) die Notbetrieb-Steuerung (12) aktiviert oder deaktiviert.

2. Wechselrichter nach Anspruch 1, **dadurch gekennzeichnet, dass** die Koordinations-Steuerung (14) die Notbetrieb-Steuerung (12) deaktiviert, wenn die unabhängige Versorgungseinheit (7) mittels der Abgabe des Status-Signals eine Bereitschaft zur Energieversorgung der Endstufeneinheiten (8) bestätigt und das Bereitschafts-Signal der Steuereinheit (6) abgegeben wird und diese Signale von der Koordinations-Steuerung (14) empfangen werden.

3. Wechselrichter nach Anspruch 1 oder 2, **dadurch gekennzeichnet, dass** die Notbetrieb-Versorgung (13) eine Versorgungsenergie für die Endstufeneinheiten (8) aus dem Energieversorgungsnetz (3) erzeugt und die Koordinations-Steuerung (14) die Notbetrieb-Versorgung (13) in Abhängigkeit des Status-Signals der unabhängigen Versorgungseinheit (7) und des Bereitschafts-Signals der Steuereinheit (6) einschaltet oder ausschaltet.

4. Wechselrichter nach Anspruch 3, **dadurch gekennzeichnet, dass** die Koordinations-Steuerung (14) die Notbetrieb-Versorgung (13) abschaltet, wenn die unabhängige Versorgungseinheit (7) mittels der Abgabe des Status-Signals eine Bereitschaft zur Energieversorgung der Endstufeneinheiten (8) bestätigt und das Bereitschafts-Signal der Steuereinheit (6) abgegeben wird und diese Signale von der Koordinations-Steuerung (14) empfangen werden.

5. Wechselrichter nach einem der vorhergehenden Ansprüchen, **dadurch gekennzeichnet, dass** der Wechselrichter (2) einen Potentialübertrager (15) zur Übertragung der Versorgungsspannung von der unabhängigen Versorgungseinheit (7) in die Endstufeneinheiten (8) aufweist und das Status-Signal der unabhängigen Versorgungseinheit (7) und das Bereitschafts-Signal der Steuereinheit (6) auf die Versorgungsspannung aufmoduliert werden und mittels des Potentialübertragers (15) in die Endstufeneinheiten (8) übermittelt werden.

6. Verfahren zum Betreiben eines Wechselrichters (2) für eine elektrische Maschine (1), wobei der Wechselrichter (2) mindestens zwei Endstufeneinheiten (8) zur Herstellung einer Verbindung zwischen der elektrischen Maschine (1) und einem Energieversorgungsnetz (3) aufweist, bei dem im Normalbetrieb die Endstufeneinheiten (8) über eine von dem Energieversorgungsnetz (3) unabhängige Versorgungseinheit (7) mit Energie versorgt und über eine Steuereinheit (6) gesteuert werden und der Wechselrichter (2) eine Notbetrieb-Steuerung (12) aufweist zur Steuerung der Endstufeneinheiten (8) derart, dass Schaltelemente innerhalb der Endstufeneinheiten (8) in einen Kurzschlussbetrieb geschaltet werden
**dadurch gekennzeichnet, dass**
in jeder Endstufeneinheit (8) eine solche Notbetrieb-Steuerung (12), eine Notbetrieb-Versorgung (13) und eine Koordinations-Steuerung (14) vorgesehen sind, und die Koordinations-Steuerung (14) in Abhängigkeit eines Status-Signals der unabhängigen Versorgungseinheit (7) und eines Bereitschafts-Signals der Steuereinheit (6) die Notbetrieb-Steuerung (12) aktiviert oder deaktiviert.

7. Verfahren nach Anspruch 6, **dadurch gekennzeichnet, dass** die Koordinations-Steuerung (14) die Notbetrieb-Steuerung (12) deaktiviert, wenn die unabhängige Versorgungseinheit (7) mittels der Abgabe des Status-Signals eine Bereitschaft zur Energieversorgung der Endstufeneinheiten (8) bestätigt und das Bereitschafts-Signal der Steuereinheit (6) abgegeben wird und diese Signale von der Koordinations-Steuerung (14) empfangen werden.

8. Verfahren nach Anspruch 6 oder 7, **dadurch gekennzeichnet, dass** die Notbetrieb-Versorgung (13) die Energie zur Energieversorgung der Endstufeneinheiten (8) aus dem Energieversorgungsnetz (3) erzeugt und die Koordinations-Steuerung (14) die Notbetrieb-Versorgung (13) in Abhängigkeit des Status-Signals der unabhängigen Versorgungseinheit (7) und des Bereitschafts-Signals der Steuereinheit (6) einschaltet oder ausschaltet.

9. Verfahren nach Anspruch 8, **dadurch gekennzeichnet, dass** die Koordinations-Steuerung (14) die Notbetrieb-Versorgung (13) abschaltet, wenn die unabhängige Versorgungseinheit (7) mittels der Abgabe des Status-Signals eine Bereitschaft zur Energieversorgung der Endstufeneinheiten (8) bestätigt und das Bereitschafts-Signal der Steuereinheit (6) abgegeben wird und diese Signale von der Koordinations-Steuerung (14) empfangen werden.

10. Verfahren nach Anspruch 6, 7, 8 oder 9, **dadurch gekennzeichnet, dass** die Notbetrieb-Steuerung (12) die jeweilige Endstufeneinheit (8) derart steuert, dass ein Überstrom in der Endstufe verhindert wird.

11. Verfahren nach Anspruch 10, **dadurch gekennzeichnet, dass** bei Diagnose eines Überstromes nicht das Schalten in den Kurzschlussbetrieb verhindert wird oder ein Kurzschlussbetrieb abgebrochen wird.

## Claims

1. Inverter (2) for an electric machine (1),
comprising at least two output stage units (8) for producing a connection between the electric machine (1) and an energy supply grid (3),
comprising a control unit (6) for controlling the at least two output stage units (8),
comprising a supply unit (7), which is independent of the energy supply grid (3), for supplying energy to the output stage units (8),
comprising at least one emergency operation controller (12) assigned to the output stage units (8) for controlling the output stage units (8) in such a way that switching elements within the output stage units (8) are switched to a short-circuit operating mode,
**characterized in that**
an emergency operation controller (12) of this type, an emergency operation supply (13) and a coordination controller (14) are provided in each output stage unit (8),
and the coordination controller (14) activates or deactivates the emergency operation controller (12) depending on a status signal of the independent supply unit (7) and on a ready signal of the control unit (6).

2. Inverter according to Claim 1, **characterized in that** the coordination controller (14) deactivates the emergency operation controller (12) if the independent supply unit (7), by outputting the status signal, confirms it is ready to supply energy to the output stage units (8) and the ready signal of the control unit (6) is output and these signals are received by the coordination controller (14).

3. Inverter according to Claim 1 or 2, **characterized in that** the emergency operation supply (13) generates supply energy for the output stage units (8) from the energy supply grid (3) and the coordination controller (14) switches the emergency operation supply (13) on or off depending on the status signal of the independent supply unit (7) and on the ready signal of the control unit (6).

4. Inverter according to Claim 3, **characterized in that** the coordination controller (14) switches the emergency operation supply (13) off if the independent supply unit (7), by outputting the status signal, confirms it is ready to supply energy to the output stage units (8) and the ready signal of the control unit (6) is output and these signals are received by the coordination controller (14) .

5. Inverter according to one of the preceding claims, **characterized in that** the inverter (2) has a potential transformer (15) for transferring the supply voltage from the independent supply unit (7) to the output stage units (8) and the status signal of the independent supply unit (7) and the ready signal of the control unit (6) are modulated onto the supply voltage and are transmitted to the output stage units (8) by means of the potential transformer (15).

6. Method for operating an inverter (2) for an electric machine (1), wherein the inverter (2) has at least two output stage units (8) for producing a connection between the electric machine (1) and an energy supply grid (3), in which method, during normal operation, energy is supplied to the output stage units (8) via a supply unit (7) which is independent of the energy supply grid (3), and said output stage units (8) are controlled via a control unit (6) and the inverter (2) has an emergency operation controller (12) for controlling the output stage units (8) in such a way that switching elements within the output stage units (8) are switched to a short-circuit operating mode,
**characterized in that**
an emergency operation controller (12) of this type, an emergency operation supply (13) and a coordination controller (14) are provided in each output stage unit (8), and the coordination controller (14) activates or deactivates the emergency operation controller (12) depending on a status signal' of the independent supply unit (7) and on a ready signal of the control unit (6).

7. Method according to Claim 6, **characterized in that** the coordination controller (14) deactivates the emergency operation controller (12) if the independent supply unit (7), by outputting the status signal, confirms it is ready to supply energy to the output stage units (8) and the ready signal of the control unit (6) is output and these signals are received by the coordination controller (14) .

8. Method according to Claim 6 or 7, **characterized in that** the emergency operation supply (13) generates the energy for supplying energy to the output stage units (8) from the energy supply grid (3) and the coordination controller (14) switches the emergency operation supply (13) on or off depending on the status signal of the independent supply unit (7) and on the ready signal of the control unit (6).

9. Method according to Claim 8, **characterized in that** the coordination controller (14) switches the emergency operation supply (13) off if the independent supply unit (7), by outputting the status signal, confirms it is ready to supply energy to the output stage units (8) and the ready signal of the control unit (6) is output and these signals are received by the coordination controller (14) .

10. Method according to Claim 6, 7, 8 or 9, **characterized in that** the emergency operation controller (12) controls the respective output stage unit (8) in such a way that an overcurrent in the output stage is prevented.

11. Method according to Claim 10, **characterized in that,** in the event of diagnosis of an overcurrent, not switching to the short-circuit operating mode is prevented or a short-circuit operating mode is terminated.

## Revendications

1. Onduleur (2) destiné à une machine électrique (1) et comprenant
au moins deux unités d'étage de sortie (8) destinées à établir une liaison entre la machine électrique (1) et un réseau d'alimentation en énergie (3),
une unité de commande (6) destinée à commander les au moins deux unités d'étage de sortie (8),
une unité d'alimentation (7) indépendante du réseau d'alimentation en énergie (3) et destinée à alimenter en énergie les unités d'étage de sortie (8),
au moins une commande de fonctionnement de secours (12) associée aux unités d'étage de sortie (8) et destinée à commander les unités d'étage de sortie (8) de façon à commuter les éléments de commutation situés dans les unités d'étage de sortie (8) en fonctionnement en court-circuit,
**caractérisé en ce que**
une telle commande de fonctionnement de secours (12), une alimentation de fonctionnement de secours (13) et une commande de coordination (14) sont prévues dans chaque unité d'étage de sortie (8),
et la commande de coordination (14) active ou désactive la commande de fonctionnement de secours (12) en fonction d'un signal d'état provenant de l'unité d'alimentation indépendante (7) et d'un signal de disponibilité de l'unité de commande (6).

2. Onduleur selon la revendication 1, **caractérisé en ce que**
la commande de coordination (14) désactive la commande de fonctionnement de secours (12) lorsque l'unité d'alimentation indépendante (7) confirme au moyen de la délivrance du signal d'état qu'elle est disponible pour alimenter les unités d'étage de sortie (8) et lorsque le signal de disponibilité de l'unité de commande (6) est délivré et que ces signaux sont reçus par la commande de coordination (14).

3. Onduleur selon la revendication 1 ou 2, **caractérisé en ce que**
l'alimentation de secours (13) génère une énergie d'alimentation destinée aux unités d'étage de sortie (8) à partir du réseau d'alimentation en énergie (3) et la commande de coordination (14) active ou désactive l'alimentation de fonctionnement de secours (13) en fonction du signal d'état de l'unité d'alimentation indépendante (7) et du signal de disponibilité de l'unité de commande (6).

4. Onduleur selon la revendication 3, **caractérisé en ce que**
la commande de coordination (14) désactive l'alimentation de secours (13) lorsque l'unité d'alimentation indépendante (7) confirme au moyen de la sortie du signal d'état qu'elle est disponible pour alimenter les unités d'étage de sortie (8) et lorsque le signal de disponibilité de l'unité de commande (6) est délivré et que ces signaux sont reçus par la commande de coordination (14).

5. Onduleur selon l'une des revendications précédentes, **caractérisé en ce que**
l'onduleur (2) comporte un transformateur de potentiel (15) destiné à transmettre la tension d'alimentation de l'unité d'alimentation indépendante (7) aux unités d'étage de sortie (8) et le signal d'état de l'unité d'alimentation indépendante (7) et le signal de disponibilité de l'unité de commande (6) modulent la tension d'alimentation et sont transmis aux unités d'étage de sortie (8) au moyen du transformateur de potentiel (15).

6. Procédé de fonctionnement d'un onduleur (2) destiné à une machine électrique (1), l'onduleur (2) comportant au moins deux unités d'étage de sortie (8) destinées à établir une liaison entre la machine électrique (1) et un réseau d'alimentation en énergie (3), onduleur dans lequel, en fonctionnement normal, les unités d'étage de sortie (8) sont alimentées en énergie par le biais d'une unité d'alimentation (7) indépendante du réseau d'alimentation en énergie (3) et sont commandées par le biais d'une unité de commande (6) et l'onduleur (2) comportant une commande de fonctionnement de secours (12) destinée à commander les unités d'étage de sortie (8) de façon à commuter les éléments de commutation situés à l'intérieur des unités d'étage de sortie (8) en fonctionnement en court-circuit,
**caractérisé en ce que**
une telle commande de fonctionnement de secours (12), une alimentation de fonctionnement de secours (13) et une commande de coordination (14) sont prévues dans chaque unité d'étage de sortie (8), et la commande de coordination (14) active ou désactive la commande de fonctionnement de secours (12) en fonction d'un signal d'état de l'unité d'alimentation indépendante (7) et d'un signal de disponibilité de l'unité de commande (6) .

7. Procédé selon la revendication 6, **caractérisé en ce que**
la commande de coordination (14) désactive la commande de fonctionnement de secours (12) lorsque l'unité d'alimentation indépendante (7) confirme au moyen de la délivrance du signal d'état la disponibilité de l'alimentation en énergie des unités d'étage de sortie (8) et lorsque le signal de disponibilité de l'unité de commande (6) est délivré et que ces signaux sont reçus par la commande de coordination (14).

8. Procédé selon la revendication 6 ou 7, **caractérisé en ce que** l'alimentation de fonctionnement de secours (13) génère l'énergie destinée à alimenter les unités d'étage de sortie (8) à partir du réseau d'alimentation en énergie (3) et la commande de coordination (14) active ou désactive l'alimentation de fonctionnement de secours (13) en fonction du signal d'état de l'unité d'alimentation indépendante (7) et du signal de disponibilité de l'unité de commande (6).

9. Procédé selon la revendication 8, **caractérisé en ce que**
la commande de coordination (14) désactive l'alimentation de fonctionnement de secours (13) lorsque l'unité d'alimentation indépendante (7) confirme au moyen de la délivrance du signal d'état qu'elle est disponible pour alimenter les unités d'étage de sortie (8) et lorsque le signal de disponibilité de l'unité de commande (6) est délivré et que ces signaux sont reçus par la commande de coordination (14).

10. Procédé selon la revendication 6, 7, 8 ou 9, **caractérisé en ce que** la commande de fonctionnement de secours (12) commande l'unité d'étage de sortie respective (8) de manière à empêcher une surintensité dans l'étage de sortie.

11. Procédé selon la revendication 10, **caractérisé en ce que**, en cas de diagnostic d'une surintensité, la commutation dans le fonctionnement en court-circuit n'est pas empêchée ou un fonctionnement en court-circuit est annulé.
